# FASCICULE DE BREVET EUROPEEN

(11) **EP 3 795 406 B1**
(45) Date de publication et mention de la délivrance du brevet: **28.06.2023**
(21) Numéro de dépôt: 20194757.9
(22) Date de dépôt: 07.09.2020
(51) Int. Cl.: B60K 35/00, B60K 37/06, G03H 1/00, G03H 1/22, G06F 3/01

(54) **PIÈCE DE VÉHICULE AVEC INTERFACE UTILISATEUR**
FAHRZEUGTEIL MIT BENUTZERSCHNITTSTELLE
VEHICLE PART WITH USER INTERFACE

(30) Priorité: 20.09.2019 FR 1910401
(43) Date de publication de la demande: 24.03.2021
(73) Titulaire: Compagnie Plastic Omnium SE, 69007 Lyon (FR)
(72) Inventeur: KHAYAT, Issam, 01150 Sainte-Julie (FR); SCHOTT, Vivien, 01150 Sainte-Julie (FR)
(74) Mandataire: LLR

(56) Documents cités:
- WO-A1-2010/125367
- DE-A1-102013 011 253
- DE-A1-102016 120 995
- US-A1- 2017 237 945
- US-B2- 8 547 615

## Description

L'invention concerne une pièce de véhicule automobile. Plus particulièrement, l'invention concerne une pièce de véhicule automobile présentant une interface utilisateur.

On connaît déjà dans l'état la technique des véhicules automobiles présentant une interface permettant au véhicule de communiquer avec une personne et/ou permettant à un utilisateur de communiquer avec le véhicule. Dans le premier cas, il peut s'agir d'informations présentées par le véhicule à l'attention de l'utilisateur du véhicule. Dans le second cas, il peut s'agir d'instructions données par l'utilisateur au véhicule, par exemple pour déverrouiller le véhicule. La communication peut se dérouler dans les deux sens, comme par exemple dans le cas où l'utilisateur donne pour instructions au véhicule d'ouvrir une portière et que le véhicule demande à l'utilisateur de rentrer un code prédéterminé avant d'exécuter la tâche demandée.

Une telle interface peut se présenter sous la forme d'un écran tactile ménagé sur la carrosserie du véhicule couplé avec une unité de commande électronique ou UCE. Les informations données par le véhicule sont affichées sur l'écran, et l'utilisateur peut appuyer sur l'écran pour donner des instructions, par exemple en appuyant sur un clavier tactile ou en faisant lire son empreinte digitale. Le document US2017237945.A1 divulgue une pièce de véhicule selon le préambule de la revendication 1.

Cette interface est intéressante mais pose certains problèmes. En effet, la carrosserie du véhicule est exposée à l'environnement extérieur, ce qui fait qu'elle peut être sale, auquel cas il est préférable de ne pas toucher l'écran tactile pour des raisons d'hygiène. Inversement, toucher un écran tactile avec ses doigts laisse généralement une trace de gras dessus, ce qui nuit à l'aspect de l'écran tactile et donc du véhicule. De plus, un écran tactile fonctionne généralement mal lorsque les doigts de l'utilisateur sont mouillés, si bien que l'écran tactile peut être inopérant en cas de pluie.

L'invention a notamment pour but de remédier à ces problèmes en proposant une interface utilisateur évitant les contacts entre l'utilisateur et le véhicule.

A cet effet, on prévoit selon l'invention une pièce de véhicule selon la revendication 1.

Ainsi, l'interface est dématérialisée et se présente sous la forme d'un hologramme généré par la source de lumière et la plaque à micro-miroirs. Grâce au capteur, l'utilisateur peut interagir avec l'hologramme. Ce dernier étant formé par une image projetée dans l'air, on comprend que l'utilisateur n'a pas besoin de toucher la carrosserie du véhicule, ce qui lui permet d'éviter les désavantages énoncés plus haut.

Avantageusement, la plaque à micro-miroirs est recouverte par une peau transparente à la lumière visible et à l'infrarouge.

On peut ainsi protéger la plaque à micro-miroirs de sollicitations mécaniques, notamment malicieuses, qui pourraient la détériorer, sans pour autant empêcher la projection et le fonctionnement de l'hologramme.

De préférence, la peau est réalisée en polycarbonate, en polypropylène ou en poly(méthacrylate de méthyle).

La peau peut ainsi être fabriquée par moulage, et ce de manière peu onéreuse.

Avantageusement, le capteur est formé par un capteur infrarouge.

Le capteur est ainsi simple à réaliser.

Avantageusement, la pièce de véhicule comprend en outre un détecteur apte à détecter l'approche d'un utilisateur vers la pièce de véhicule.

On peut ainsi lancer automatiquement la génération de l'hologramme sans que l'utilisateur n'ait besoin de l'activer, ce qui rend l'interface plus commode à utiliser.

La pièce de véhicule forme un hayon, une porte ou un pare-choc de véhicule.

Ces types de pièces de véhicules correspondent à des zones du véhicule qui se prêtent bien à communication d'informations ou à la réception d'instructions.

Selon un premier mode de réalisation de l'invention, la source de lumière comprend un écran lumineux.

Avantageusement, l'écran lumineux est de forme courbe.

On donne ainsi une forme courbe à l'hologramme, ce qui lui donne une esthétique certaine.

Avantageusement, la pièce de véhicule comprend en outre une lentille d'agrandissement placée entre l'écran lumineux et la plaque à micro-miroirs.

On peut ainsi réduire la taille de l'écran lumineux sans pour autant affecter la taille de l'hologramme. On réduit de la sorte l'encombrement à l'intérieur de la pièce de véhicule.

Selon un deuxième mode de réalisation de l'invention, la source de lumière comprend un écran de projection éclairé par un vidéoprojecteur.

Selon un troisième mode de réalisation de l'invention, la source de lumière comprend un écran de rétroprojection éclairé par un vidéoprojecteur.

Avantageusement, le vidéoprojecteur est du type à courte focale.

On peut ainsi réduire la distance entre le vidéoprojecteur et l'écran de projection ou de rétroprojection, ce qui contribue à réduire l'encombrement à l'intérieur de la pièce de véhicule.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective d'une pièce de véhicule selon l'invention,
[Fig. 2] la figure 2 est une vue en section d'une pièce de véhicule selon un premier mode de réalisation de l'invention, à l'état désactivé,
[Fig. 3] la figure 3 est une vue en section de la pièce de véhicule de la figure 2, à l'état activé,
[Fig. 4] la figure 4 est un schéma illustrant les interactions des éléments de la pièce de véhicule des figures 2 et 3 entre eux et avec un utilisateur,
[Fig. 5] la figure 5 est une vue en section de la pièce de véhicule de la figure 3 selon une variante de réalisation,
[Fig. 6] la figure 6 est une vue en perspective de la pièce de véhicule de la figure 5 selon une configuration alternative,
[Fig. 7] la figure 7 est une vue en section de la pièce de véhicule de la figure 3 selon une autre variante de réalisation,
[Fig. 8] la figure 8 est un schéma illustrant les interactions des éléments de la pièce de véhicule de la figure 7 entre eux et avec un utilisateur,
[Fig. 9] la figure 9 est une vue en section d'une pièce de véhicule selon un deuxième mode de réalisation de l'invention,
[Fig. 10] la figure 10 est un schéma illustrant les interactions des éléments de la pièce de véhicule de la figure 9 entre eux et avec un utilisateur,
[Fig. 11] la figure 11 est une vue en section de la pièce de véhicule de la figure 9 selon une variante de réalisation,
[Fig. 12] la figure 12 est une vue en section d'une pièce de véhicule selon un troisième mode de réalisation de l'invention, et
[Fig. 13] la figure 13 est un schéma illustrant les interactions des éléments de la pièce de véhicule de la figure 12 entre eux et avec un utilisateur.

### Description détaillée

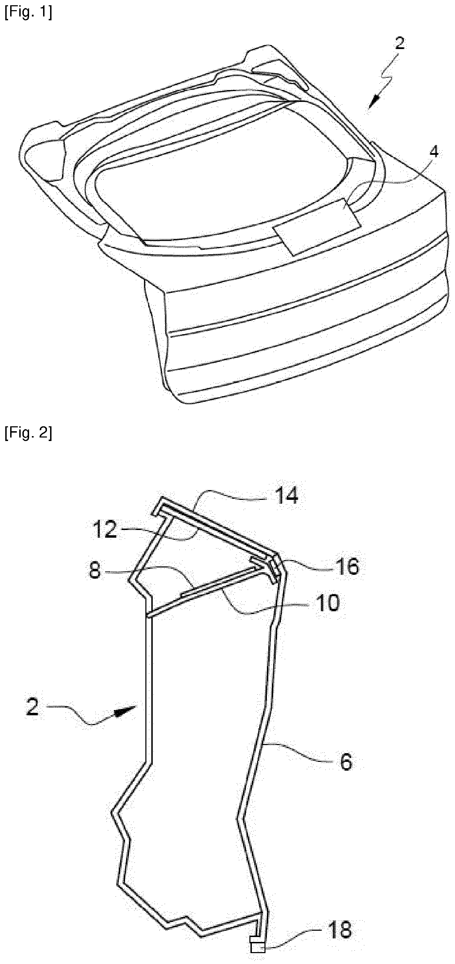

On a représenté en figure 1 une pièce de véhicule 2 selon l'invention. Dans le cas présent, la pièce de véhicule 2 forme un hayon de véhicule automobile, mais on peut prévoir qu'il s'agisse d'une toute autre partie d'un véhicule, comme une portière ou un pare-choc pour ne citer que quelques exemples. Comme cela est visible, un hologramme 4 est affiché est visible de toute personne se trouvant derrière le véhicule.

La pièce de véhicule 2 est représentée plus en détails sur la figure 2. La pièce de véhicule 2 comprend une structure 6 correspondant à la fonction première de la pièce de véhicule 2. Dans le cas présent, il s'agit d'une structure de hayon qu'on ne décrira pas davantage dans ce qui suit.

La pièce de véhicule 2 comprend une source de lumière 8 apte à émettre une image lumineuse. Cette source de lumière 8 est ici formée par un écran lumineux, de forme générale plate, porté par un support 10 fixé à la structure 6. La source de lumière 8 est couplée avec une unité de commande électronique ou UCE 11a qui permet à l'écran lumineux d'émettre une image lumineuse. L'UCE 11a peut par ailleurs être connectée à un module de contrôle fonctionnel 11b appartenant au véhicule sur lequel la pièce de véhicule 2 doit être installée. La source de lumière 8 et l'UCE 11a peuvent être alimentés en énergie au moyen de batteries (non représentées) du véhicule.

La pièce de véhicule 2 comprend une plaque à micro-miroirs 12 apte à projeter l'image lumineuse, générée par la source de lumière 8, en dehors de la pièce de véhicule 2. La plaque à micro-miroirs 12 est couplée à l'UCE 11a. Un exemple de plaque à micro-miroirs 12 est commercialisé par la société Asukanet sous le nom « Aska3D ». Le concept de plaque à micro-miroirs, en tant que tel, étant connu, on ne le décrira pas davantage dans ce qui suit.

La pièce de véhicule 2 comprend une peau 14 recouvrant la plaque à micro-miroirs 12 afin de la protéger de sollicitations mécaniques extérieures qui pourraient la détériorer. La peau 14 est réalisée dans un matériau transparent. On entend ici par « transparent » que le matériau est au moins transparent à tout rayonnement lumineux présentant une longueur d'onde comprise dans le spectre visible, c'est-à-dire comprise entre environ 380 et 780 nm, ou une longueur d'onde comprise dans l'infrarouge, c'est-à-dire comprise entre 700 et 20000 nm dans le cadre de l'invention. La peau 14 est ici réalisée dans un plastique présentant cette caractéristique, en l'occurrence du polycarbonate communément désigné « PC ». On peut toutefois prévoir de réaliser la peau dans un tout autre plastique présentant cette caractéristique, par exemple le polypropylène (PP) ou le poly(méthacrylate de méthyle) (PMMA). La peau 14 peut être semi-transparente afin de dissimuler la plaque à micro-miroirs 14 de la vue. On entend ici par « semi-transparente » que la peau 14 ne transmet qu'une partie de la lumière visible, par exemple à hauteur de 10% à 40%. Cette surface réduit la luminosité de l'hologramme 4 mais n'empêche pas sa génération.

La pièce de véhicule 2 comprend un capteur 16, ici un capteur infrarouge. Le capteur 16 est couplé à l'UCE 11a, porté par le support 10 et recouvert par la peau 14. La fonction du capteur 16 sera décrite plus loin.

Dans la figure 2, la pièce de véhicule 2 est à l'état désactivé, ce qui signifie que la source de lumière 8 est éteinte et qu'aucun hologramme n'est généré.

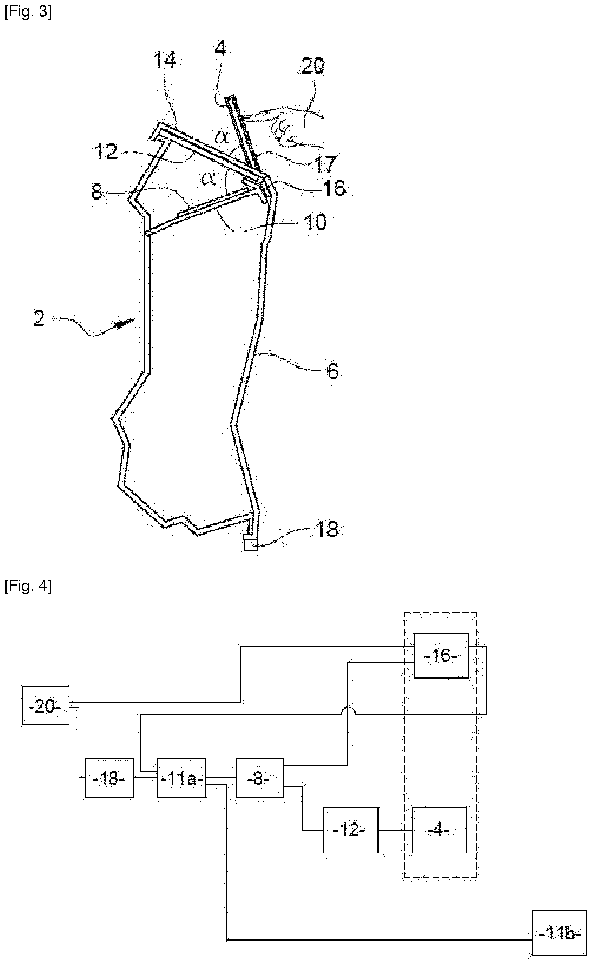

La figure 3 illustre la pièce de véhicule 2 lorsqu'elle est activée. Cette activation peut être commandée à l'aide d'un détecteur 18 apte à détecter l'approche d'une personne vers la pièce de véhicule 2 et sous certaines éventuelles conditions supplémentaires prédéterminées, par exemple la détection de la clé du véhicule. Ici, le détecteur 18 comprend un capteur de position fixé à l'extérieur de la pièce de véhicule 2. Ce capteur de position peut être choisi parmi la liste de capteurs suivante : Inter Real Sense, Leap Motion, Sony Depthsensing Solutions, Neonode Force AIR Touch Sensor, SMK Corporation TJ Q0100 Series. Lorsque le détecteur 18 détecte qu'une personne s'approche de la pièce de véhicule 2, il envoie un signal à l'UCE 11a en vue d'activer la source de lumière 8 et la plaque à micro-miroirs 12.

La figure 4 schématise les interactions entre un utilisateur 20 et les éléments de la pièce de véhicule 2. Dans l'état activé, la source de lumière 8 est allumée et génère une image lumineuse. Cette image lumineuse est émise en direction de la plaque à micro-miroirs 12 qui projette l'image lumineuse en dehors de la pièce de véhicule 2 de manière à générer l'hologramme 4. L'écran lumineux étant de forme générale plate, l'hologramme 4 a une forme plane. La plaque à micro-miroirs 12 projette l'hologramme 4 de telle sorte que l'angle α entre l'écran lumineux et la plaque à micro-miroirs 12 est égal à l'angle entre la plaque à micro-miroirs 12 et le plan de l'hologramme 4. On comprend ainsi qu'en choisissant l'agencement de la source de lumière 8 par rapport à la plaque à micro-miroirs 12, on peut moduler l'inclinaison de l'hologramme 4 par rapport à la pièce de véhicule 2. Dans le cas présent, un angle α d'environ 45° est particulièrement commode pour que l'hologramme 4 soit bien visible et ait une position ergonomique.

Le capteur 16 est orienté de telle sorte qu'il peut détecter la présence de tout objet se trouvant dans un plan de détection 17 coïncidant avec le plan dans lequel est situé l'hologramme 4. Si l'UCE 11a attend une interaction de l'utilisateur 20 avec l'hologramme 4, il peut insérer dans l'image, et donc dans l'hologramme qui est projeté, un texte invitant l'utilisateur à interagir avec l'hologramme ainsi qu'au moins une zone dans lequel il peut interagir, par exemple un clavier. Lorsque l'utilisateur 20 traverse ladite zone avec son doigt comme illustré en figure 3, cela est détecté par le capteur 16 qui transmet ces informations à l'UCE 11a pour lui indiquer que l'utilisateur 20 a interagi avec l'hologramme 4. En d'autres termes, l'UCE 11a réagit à la position du doigt sur l'hologramme 4.

Un exemple d'application de ce système est l'affichage d'information. On peut citer comme informations l'état de chargement des batteries du véhicule, un diagnostic de l'état du véhicule, etc.

Un autre exemple d'application de ce système est le déverrouillage du véhicule. Lorsque l'utilisateur 20 s'approche du véhicule, la pièce de véhicule 2 rentre dans l'état activé, affiche un clavier dans l'hologramme 4 et invite l'utilisateur 20 à rentrer son code. Avec son doigt, il tape son code dans l'hologramme 4. Les touches du clavier de l'hologramme 4 actionnées par l'utilisateur 20 sont déterminées grâce au capteur 16. Si le code rentré est correct, l'UCE 11a émet une instruction de déverrouillage du véhicule. Dans le cas contraire, l'UCE 11a est programmé pour indiquer que le code rentré est incorrect puis pour réinviter l'utilisateur à taper son code. D'autres applications envisageables sont le réglage de la position des sièges ou des rétroviseurs du véhicule, par exemple selon des réglages prédéfinis, ou bien lancer un programme de sortie de place de parking en mode autonome, pour ne citer que quelques exemples.

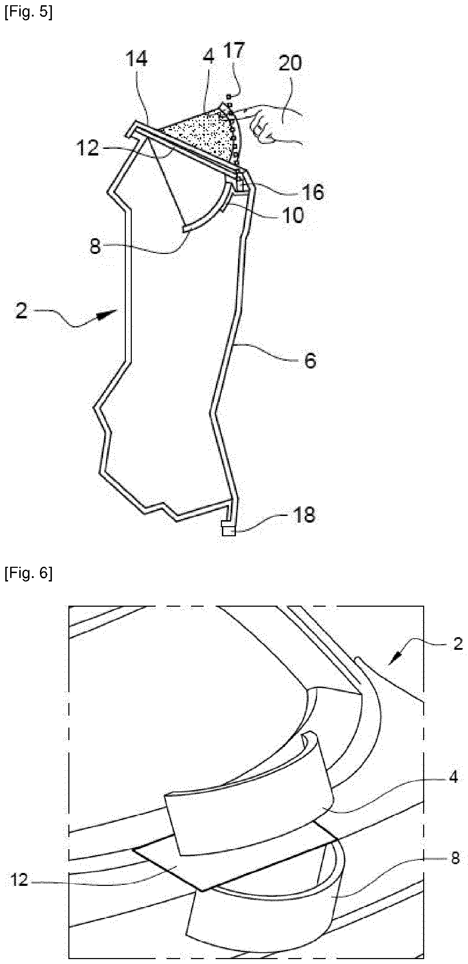

On a représenté en figure 5 la pièce de véhicule 2 selon une variante du premier mode de réalisation. L'écran lumineux de la source de lumière 8 a désormais une forme générale courbe. Il s'ensuit que l'hologramme 4 a également une forme courbe, ce qui lui donne une esthétique certaine. Dans ce cas-là, il n'est pas possible de faire coïncider le plan de détection 17 du capteur 16 avec l'hologramme 4. Au lieu de cela, le capteur 16 est orienté de manière à ce que le plan de détection 17 coïncide partiellement avec l'hologramme 4, par exemple à ce qu'il intersecte l'hologramme 4. On peut par exemple prévoir que le plan de détection 17 passe par l'isobarycentre de la forme géométrique formée par l'hologramme 4. La figure 6 illustre la pièce de véhicule 2 selon une configuration alternative dans laquelle l'écran lumineux de la source de lumière est courbé selon un galbe différent par rapport à celui de la figure 4. Il s'ensuit que l'hologramme est également courbé selon un galbe différent par rapport à celui de la figure 4. Ce galbe différent permet au plan de détection de mieux épouser le galbe et renforce ainsi la sensation de l'utilisateur que l'hologramme est interactif.

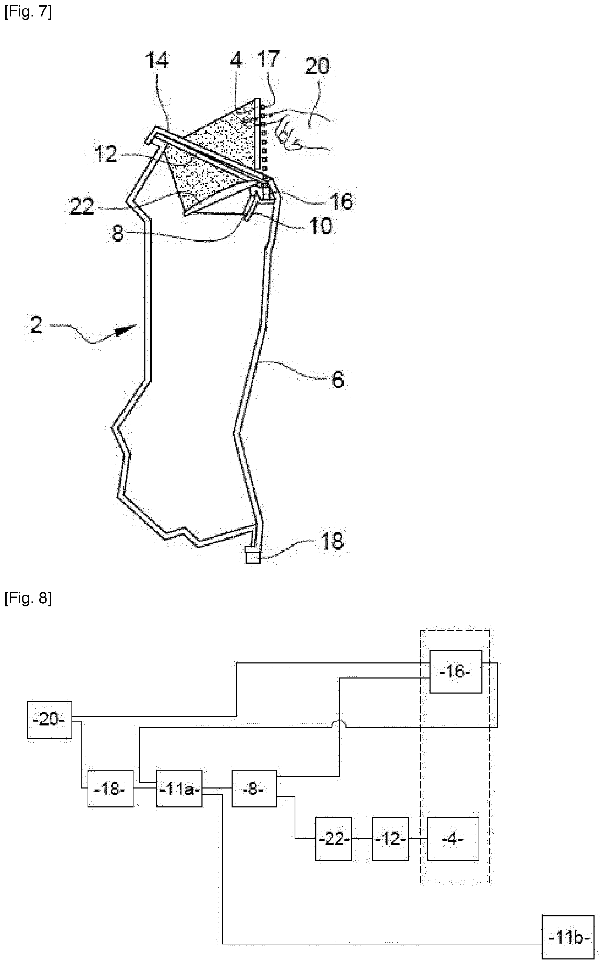

On a représenté en figures 7 et 8 la pièce de véhicule 2 selon une autre variante du premier mode de réalisation. Selon cette variante, une lentille d'agrandissement 22 est interposée entre la source de lumière 8 et la plaque à micro-miroirs 12. Cette lentille d'agrandissement 22 permet de réduire la taille de la source de lumière 8, et donc son encombrement, sans pour autant réduire la taille de l'hologramme 4.

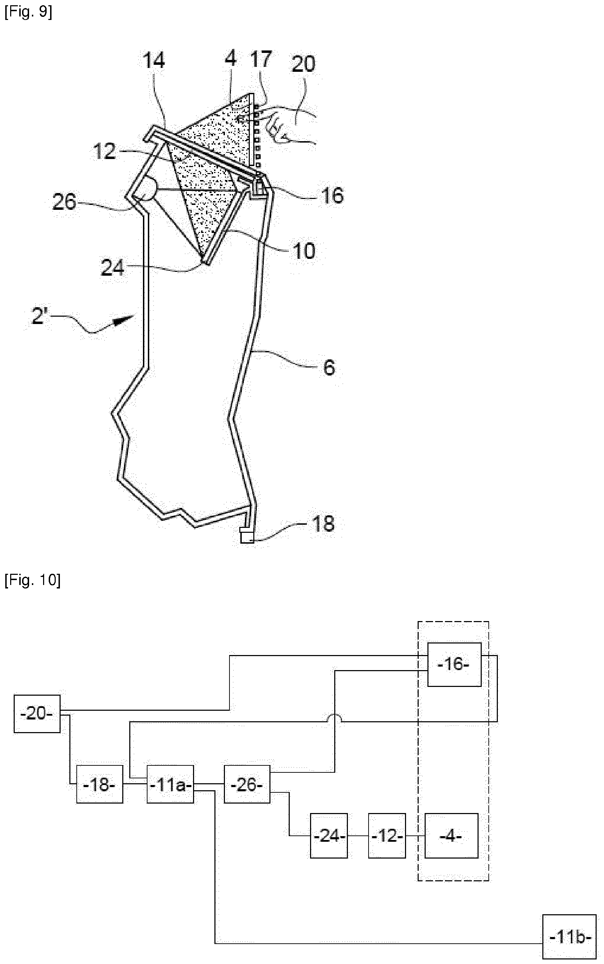

On a représenté en figures 9 et 10 une pièce de véhicule 2' selon un deuxième mode de réalisation de l'invention. Dans ce qui suit, on ne décrira que ce qui la distingue de la pièce de véhicule 2 selon le premier mode de réalisation. Les éléments similaires à ceux du premier mode de réalisation portent des références numériques identiques.

La pièce de véhicule 2' comprend une source de lumière 8 qui comprend un écran de projection 24 éclairé par un vidéoprojecteur 26. Le vidéoprojecteur 26 et la plaque à micro-miroirs 12 sont tous deux placés du même côté de l'écran de projection 24. Le vidéoprojecteur 26 est couplé avec l'UCE 11a et est apte à générer une image et à la projeter sur l'écran de projection 24. C'est l'image affichée sur l'écran de projection 24 qui est ensuite projetée par la plaque à micro-miroirs 12 pour générer l'hologramme 4. En d'autres termes, l'écran de projection 24 fait office de source de lumière secondaire.

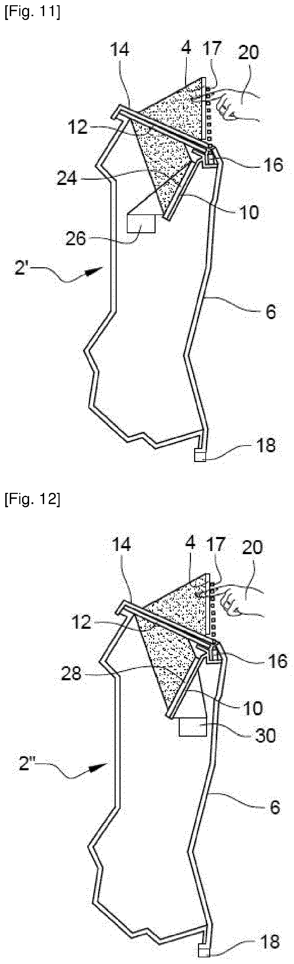

On a représenté en figure 11 la pièce de véhicule 2' selon une variante du deuxième mode de réalisation de l'invention. Selon cette variante, le vidéoprojecteur 26 est du type à courte focale, ce qui permet de modifier l'agencement des différents éléments dans la pièce de véhicule 2' et de réduire l'encombrement à l'intérieur de la pièce de véhicule 2'.

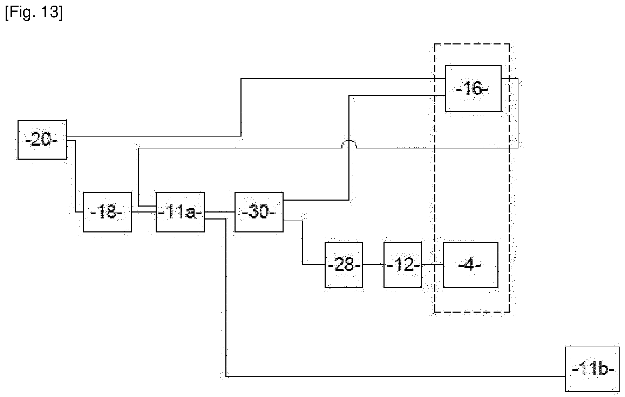

On a représenté en figures 12 et 13 une pièce de véhicule 2" selon un troisième mode de réalisation de l'invention. Dans ce qui suit, on ne décrira que ce qui la distingue de la pièce de véhicule 2' selon le deuxième mode de réalisation. Les éléments similaires à ceux du deuxième mode de réalisation portent des références numériques identiques.

La pièce de véhicule 2" comprend une source de lumière 8 qui comprend un écran de rétroprojection 28 éclairé par un vidéoprojecteur 26. Le vidéoprojecteur 26 et la plaque à micro-miroirs 12 sont placés de part et d'autre de l'écran de projection 24, ce qui permet d'autres configurations des différents éléments de la pièce de véhicules, par exemple pour respecter des contraintes d'encombrement spécifiques. Le vidéoprojecteur 26 est couplé avec l'UCE 11a et est apte à générer une image et à la projeter sur l'écran de rétroprojection 28. C'est l'image transmise par l'écran de rétroprojection 28 qui est projetée par la plaque à micro-miroirs 12 pour générer l'hologramme 4. En d'autres termes, l'écran de rétroprojection 28 fait office de source de lumière secondaire.

L'invention n'est pas limitée aux modes de réalisation présentés et d'autres modes de réalisation apparaîtront clairement à l'homme du métier.

### Liste de références

2 ; 2' ; 2" : pièce de véhicule
4 : hologramme
6 : structure
8 : source de lumière
10 : support
11a : unité de commande électronique ou UCE
11b : module de contrôle fonctionnel
12 : plaque à micro-miroirs
14 : peau
16 : capteur
17 : plan de détection
18 : détecteur
20 : utilisateur
22 : lentille d'agrandissement
24 : écran de projection
26 : vidéoprojecteur
28 : écran de rétroprojection
30 : vidéoprojecteur

## Revendications

1. Pièce de carrosserie de véhicule (2 ; 2' ; 2") formant un hayon, une porte ou un pare-choc de véhicule, comprenant :
- une source de lumière (8) apte à émettre une image lumineuse, et
- une plaque à micro-miroirs (12) apte à projeter l'image lumineuse en dehors de la pièce de véhicule (2 ; 2' ; 2") sous la forme d'un hologramme (4),
**caractérisée en ce qu'**elle comprend en outre :
- un capteur (16) apte à détecter la présence de tout objet dans un plan de projection (17) coïncidant au moins partiellement avec l'hologramme (4).

2. Pièce de véhicule (2 ; 2' ; 2") selon la revendication précédente, dans laquelle la plaque à micro-miroirs (12) est recouverte par une peau (14) transparente à la lumière visible et à l'infrarouge.

3. Pièce de véhicule (2 ; 2' ; 2") selon la revendication précédente, dans laquelle la peau (14) est réalisée en polycarbonate, en polypropylène ou en poly(méthacrylate de méthyle).

4. Pièce de véhicule (2 ; 2' ; 2") selon l'une quelconque des revendications précédentes, dans laquelle le capteur (16) est formé par un capteur infrarouge.

5. Pièce de véhicule (2 ; 2' ; 2") selon l'une quelconque des revendications précédentes, comprenant en outre un détecteur (18) apte à détecter l'approche d'un utilisateur vers la pièce de véhicule (2 ; 2' ; 2").

6. Pièce de véhicule (2) selon l'une quelconque des revendications 1 à 5, dans laquelle la source de lumière (8) comprend un écran lumineux.

7. Pièce de véhicule (2) selon la revendication 6, dans laquelle l'écran lumineux est de forme courbe.

8. Pièce de véhicule (2) selon la revendication 6, comprenant en outre une lentille d'agrandissement (22) placée entre l'écran lumineux et la plaque à micro-miroirs (12).

9. Pièce de véhicule (2') selon l'une quelconque des revendications 1 à 5, dans laquelle la source de lumière (8) comprend un écran de projection (24) éclairé par un vidéoprojecteur (26).

10. Pièce de véhicule (2") selon l'une quelconque des revendications 1 à 5, dans laquelle la source de lumière (8) comprend un écran de rétroprojection (28) éclairé par un vidéoprojecteur (30).

11. Pièce de véhicule (2' ; 2") selon la revendication 9 ou 10, dans laquelle le vidéoprojecteur (26 ; 30) est du type à courte focale.

## Patentansprüche

1. Fahrzeugkarosserieteil (2; 2'; 2"), das eine Heckklappe, eine Tür oder einen Stoßfänger eines Fahrzeugs bildet, aufweisend:
- eine Lichtquelle (8), die zur Erzeugung eines Leuchtbilds ausgebildet ist, und
- eine Mikrospiegelplatte (12), die ausgebildet ist, das Leuchtbild in Form eines Hologramms (4) aus dem Fahrzeugteil (2; 2'; 2") heraus zu projizieren,
**dadurch gekennzeichnet, dass** es unter anderem aufweist:
- einen Sensor (16), der ausgebildet ist, das Vorhandensein eines Objekts in einer Projektionsfläche (17), die zumindest teilweise mit dem Hologramm (4) übereinstimmt, festzustellen.

2. Fahrzeugteil (2; 2'; 2") gemäß dem vorhergehenden Anspruch, bei dem die Mikrospiegelplatte (12) von einer Folie (14) bedeckt ist, die für sichtbares Licht und Infrarotlicht durchlässig ist.

3. Fahrzeugteil (2; 2'; 2") gemäß dem vorhergehenden Anspruch, wobei die Folie (14) aus Polycarbonat, Polypropylen oder Polymethylmethacrylat hergestellt ist.

4. Fahrzeugteil (2 ; 2'; 2") gemäß einem der vorhergehenden Ansprüche, wobei der Sensor (16) durch einen Infrarotsensor gebildet ist.

5. Fahrzeugteil (2; 2'; 2") gemäß einem der vorhergehenden Ansprüche, ferner aufweisend einen Detektor (18), der ausgebildet ist, die Annäherung eines Benutzers an das Fahrzeugteil (2; 2'; 2") zu erfassen.

6. Fahrzeugteil (2) gemäß einem der Ansprüche 1 bis 5, wobei die Lichtquelle (8) einen Leuchtschirm aufweist.

7. Fahrzeugteil (2) gemäß Anspruch 6, wobei der Leuchtschirm eine gekrümmte Form aufweist.

8. Fahrzeugteil (2) gemäß Anspruch 6, ferner aufweisend eine Vergrößerungslinse (22), die zwischen dem Leuchtschirm und der Mikrospiegelplatte (12) angeordnet ist.

9. Fahrzeugteil (2') gemäß einem der vorherigen Ansprüchen 1 bis 5, wobei die Lichtquelle (8) einen Projektionsschirm (24) aufweist, der von einem Videoprojektor (26) beleuchtet wird.

10. Fahrzeugteil (2") gemäß einem der Ansprüche 1 bis 5, wobei die Lichtquelle (8) einen Rückprojektionsschirm (28) aufweist, der von einem Videoprojektor (30) beleuchtet wird.

11. Fahrzeugteil (2'; 2") gemäß Anspruch 9 oder 10, wobei der Videoprojektor (26; 30) vom Typ mit kurzer Brennweite ist.

## Claims

1. Vehicle body part (2; 2'; 2") forming a tailgate, door or bumper of a vehicle, comprising:
- a light source (8) suitable for emitting a luminous image, and
- a micro-mirror plate (12) suitable for projecting the luminous image outside of the vehicle part (2; 2'; 2") in the form of a hologram (4),
**characterized in that** it further comprises:
- a sensor (16) suitable for detecting the presence of any object in a projection plane (17) coinciding at least partially with the hologram (4).

2. Vehicle part (2; 2'; 2") according to the preceding claim, wherein the micro-mirror plate (12) is covered by a skin (14) transparent to visible light and infrared.

3. Vehicle part (2; 2'; 2") according to the preceding claim, wherein the skin (14) is made of polycarbonate, polypropylene or poly (methyl methacrylate).

4. Vehicle part (2; 2"; 2") according to any of the preceding claims, wherein the sensor (16) is formed by an infrared sensor.

5. Vehicle part (2; 2'; 2") according to any of the preceding claims, further comprising a detector (18) suitable for detecting the approach of a user towards the vehicle part (2; 2 '; 2").

6. Vehicle part (2) according to any one of claims 1 to 5, wherein the light source (8) comprises a light screen.

7. Vehicle part (2) according to claim 6, wherein the light screen has a curved shape.

8. Vehicle part (2) according to claim 6, further comprising a magnification lens (22) placed between the light screen and the micro-mirror plate (12).

9. Vehicle part (2') according to any one of claims 1 to 5, wherein the light source (8) comprises a projection screen (24) illuminated by a video projector (26).

10. Vehicle part (2") according to any one of claims 1 to 5, wherein the light source (8) comprises a rear-projection screen (28) illuminated by a video projector (30).

11. Vehicle part (2'; 2") according to claim 9 or 10, wherein the video projector (26; 30) is of the short-throw type.
